# EUROPÄISCHE PATENTSCHRIFT

(11) **EP 0 695 090 B1**
(45) Veröffentlichungstag und Bekanntmachung des Hinweises auf die Patenterteilung: **25.08.1999**
(21) Anmeldenummer: 95111192.1
(22) Anmeldetag: 15.07.1995
(51) Int. Cl.: H04N 7/00

(54) **Decoder für PALplus-Signale mit einer zyklischen Schreib/Lese-Speichersteuerung**
PALplus-signal decoder with a cyclic write/read memory control
Décodeur pour signaux PALplus avec une commande de mémoire cyclique d'écriture/lecture

(30) Priorität: 26.07.1994 DE 4426382
(43) Veröffentlichungstag der Anmeldung: 31.01.1996
(73) Patentinhaber: DEUTSCHE THOMSON-BRANDT GMBH, 78048 Villingen-Schwenningen (DE)
(72) Erfinder: Hollmann, Thomas, D-78052 Villingen-Schwenningen (DE); Hirtz, Gangolf, Dr., D-78078 Niedereschach (DE)
(74) Vertreter: Hartnack, Wolfgang, Dipl.-Ing.

(56) Entgegenhaltungen:
- DE-A- 4 243 804

## Beschreibung

Zur kompatiblen Übertragung eines Fernsehbildes mit dem Bildseitenverhältnis 16:9 innerhalb eines 4:3-Systems erfolgt entsprechend des PALplus-Systemvorschlags eine Übertragung im Letterboxformat. Dazu wird das 576-zeilige Eingangsbild derart verarbeitet, daß die vertikal niederfrequenten Signalanteile innerhalb der zentralen 432 Zeilen des Bildes übertragen werden. Die vertikal hochfrequenten Signalanteile werden nun in den verbleibenden 144 Zeilen des Bildes übertragen und bilden die Schärfeinformation des Bildes. Diese Information ist der Helper. Der Helper hat eine geringe Amplitude und wird im Schwarzbereich der Bildinformation eingelagert.

Für den kompatiblen 4:3-Empfänger ist der Helper unsichtbar. Für ihn ist nur der zentrale (Main-) bereich des Bildes sichtbar. Jeweils 72 Zeilen oberhalb und unterhalb sind für ihn schwarz (Letterbox-Bild). Der PALplus-Empfänger ist nun in der Lage, auf der Basis der Main- und Helpersignale ein Bild zu rekonstruieren, das die volle Auflösung des ursprünglichen 576-zeiligen Bildes hat. Mit Hilfe von Vertikalfiltern wird dazu die hochfrequente Information des Helpers und die niederfrequente Information des Mainbildes addiert. Außerdem ist der PALplus-Empfänger, bei entsprechender senderseitiger Vorverarbeitung der Signale, in der Lage, Übersprechstörungen von der Helligkeit in die Farbe (Cross Colour) und umgekehrt (Cross Luminanz) zu unterdrücken.

Das Verfahren zur Rekonstruktion des Bildes ist abhängig von der Quelle, die das Bild liefert. Liegt ein Film vor, so hat dieser nur 25 Bilder pro Sekunde, so daß beide Teilbilder des Zeilensprungbildes aus der gleichen Bewegungsphase stammen. Dies wird im sogenannten Filmmode ausgenutzt. Die beiden Teilbilder werden wieder zu einem Vollbild zusammengesetzt und die Verarbeitung erfolgt im Vollbild zusammen mit den 144 Helperzeilen des Vollbildes. Für Bildmaterial, das mit einer elektronischen Kamera aufgenommen wurde, stammen beide Halbbilder nicht aus der gleichen Bewegungsphase. Hier erfolgt die Aufspaltung und die Rekonstruktion des Bildes auf der Basis eines Teilbildes incl. der 72 Helperzeilen des Teilbildes.

Das Verfahren zur Unterdrückung der Übersprechstörungen hängt ab von der im Bild vorliegenden Bewegung. Für Filmmaterial wird immer das ColourPlus-Verfahren angewendet, das empfängerseitig auf einer Addition der Chrominanz und der hochfrequenten Luminanz der beiden Halbbilder beruht. Für Material einer elektronischen Kamera kommt das Motion Adaptive Colour Plus (MACP) zum Einsatz. In ruhenden Bereichen oder in Bereichen mit wenig Bewegung kommt das gleiche Verfahren wie bei Filmmaterial zum Einsatz. Liegt viel Bewegung im Bild vor, führt die ColourPlus entsprechende Reduktion auf nur 25 Bewegungsphasen zu störendem Rucken im Bild. Deshalb erfolgt für diese Bereiche bereits senderseitig ein horizontaler Frequenzmultiplex von Luminanz und Chrominanz. Dies muß bei der empfängerseitigen Verarbeitung berücksichtigt werden. Dazu ist ein Bewegungsdetektor notwendig, der zwischen beiden Modi umschaltet.

Sowohl zur Rekonstruktion der vollen Vertikalauflösung, als auch zur bewegungsabhängigen Umsteuerung der Cross-Unterdrückung sind Bildspeicher notwendig. Da sie zu den teuren Komponenten des PALplus-Systems gehören, ist eine optimale Ausnutzung der Speicher angebracht.
DE-A-42 43 804 beschreibt einen PALplus-Decoder für 100Hz-Wiedergabe mit getrennten Speichern für Helper-Signal und Main-Signal und für Luminanz und Chrominanz. Diese Teilsignale werden in der Reihenfolge, wie sie empfangen werden, in die Speicher fortlaufend eingeschrieben. Aufgrund dieser Vorgehensweise braucht ein Empfänger ca. 10MBit an Speicherplatz, davon 6MBit für die Luminanz.
In der Erfindung wird das Konzept eines PALplus-Decoders mit reduziertem Speicheraufwand dargestellt und die Steuerung der Bildspeicher beschrieben.

Die Zeichnungen zeigen in:

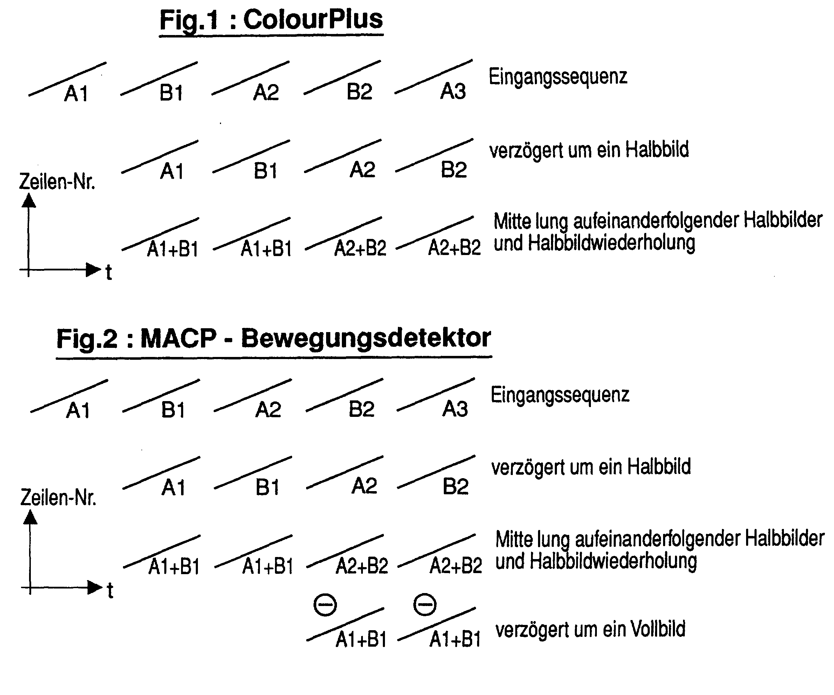

- Fig. 1: empfängerseitige Verarbeitung;
- Fig. 2: Prinzip der Bewegungsdetektion;

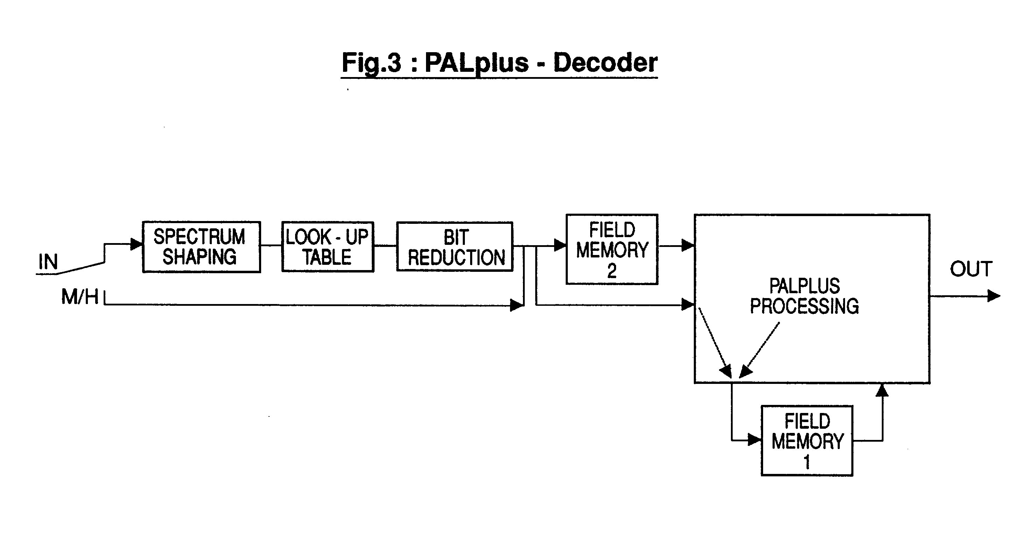

- Fig. 3: Gesamtsystem zur PALplus-Decodierung;

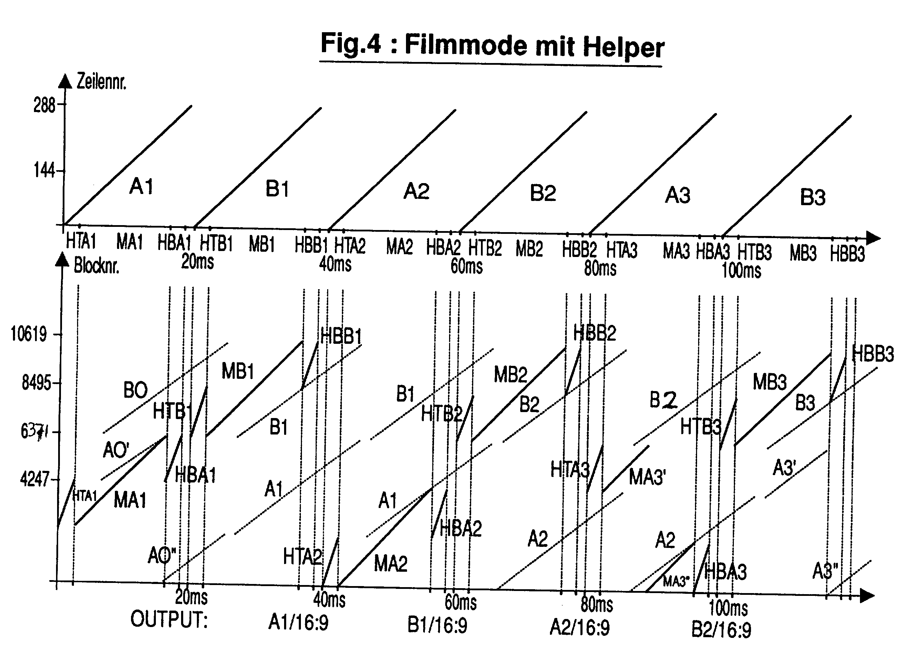

- Fig. 4: Speichersteuerung für den Filmmode;

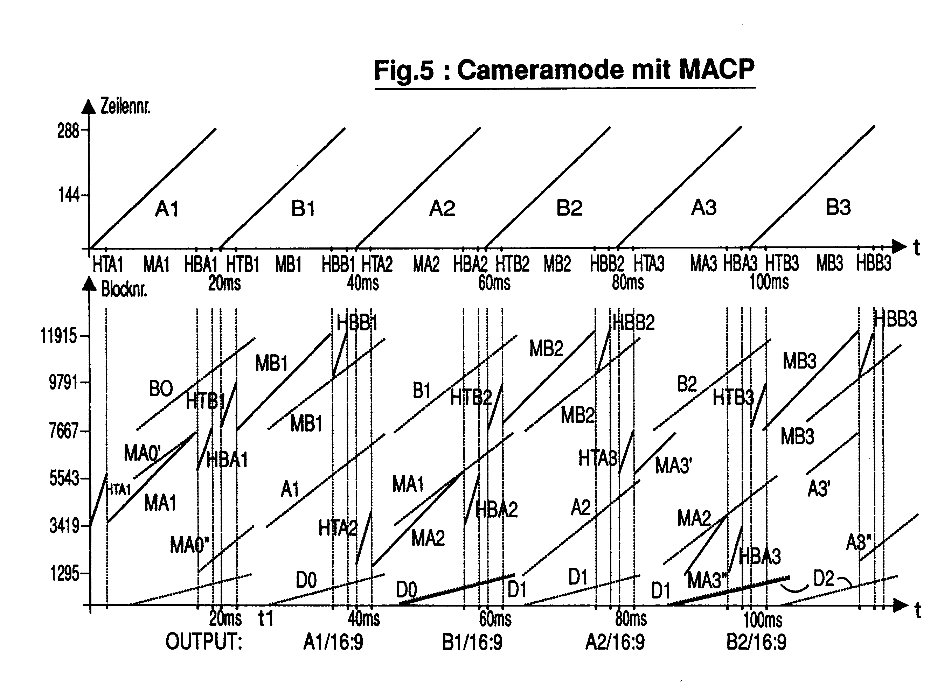

- Fig. 5: Speichersteuerung für den Cameramode inclusive der Nutzung der Speicher für den Bewegungsdetektor des Motion Adaptive ColourPlus-Verfahrens.

### Das PALplus-System

### Filmmode-Verarbeitung

Dieser Mode kommt zum Einsatz, wenn das vorliegende Material von einer Filmkamera aufgenommen wurde, und dementsprechend nur 25 Bewegungsphasen pro Sekunde hat. Zur Unterdrückung von Übersprechstörungen wird senderseitig nach der Filmabtastung mit 50Hz im Zeilensprung in der Chrominanz und in der hochfrequenten Luminanz jedes zweite Halbbild weggelassen und das verbleibende je einmal wiederholt. Die nun folgende PAL-Modulation und -Demodulation führt im allgemeinen zu Übersprechstörungen (Cross-Colour und Cross-Luminanz), die empfängerseitig ausgeschlossen werden müssen.

Die empfängerseitige Verarbeitung ist in Bild 1 dargestellt. Die eingehende Sequenz (A: erstes Halbbild, B: zweites Halbbild) wird um die Dauer eines Halbbildes verzögert. Auf der Basis der Eingangssequenz und der verzögerten Sequenz erfolgt nun eine Mittelung der zu einem Vollbild gehörigen Halbbilder. Diese Mittelung wird für die Chrominanz und für die horizontal hochfrequente Luminanz ausgeführt. Aufgrund der Eigenschaften des Farbträgers führt dies dazu, daß die jeweiligen Übersprechstörungen eliminiert werden. Eine anschließende Halbbildwiederholung liefert eine übersprechfreie Sequenz mit einer Bildfrequenz von 50Hz. Diese Verarbeitung (Colour Plus) führt zu einer Übertragung von nur 25 Bewegungsphasen für die Chrominanz und die hochfrequente Luminanz, was bei Filmmaterial keine Einschränkung darstellt.

Die Berechnung des Letterboxbildes erfolgt senderseitig auf Vollbildbasis. Dazu werden die beiden Halbbilder wieder zu einem Vollbild zusammengefaßt. Eine anschließende Vertikalfilterung spaltet das Signal in einen niederfrequenten Anteil (16:9-Mainbild) und einen hochfrequenten Anteil (Helper) auf. Die Helperzeilen werden nun in die oberen und unteren Letterboxbalken einsortiert. In den oberen Letterboxbalken (Helper Top) beider Halbbilder befinden sich die Helperzeilen für die obere Hälfte des Mainbildes, während die für die untere Bildhälfte in den unteren Randzeilen (Helper Bottom) der beiden Halbbilder zu finden sind.

Im Empfänger müssen zur Rekonstruktion der Auflösung von 576 Zeilen je zwei zusammengehörige Halbbilder wieder zu einem Vollbild zusammengesetzt werden. Mit Hilfe von Vertikalfiltern und der oberen Helperzeilen kann nun die obere Bildhälfte des 16:9- Bildes berechnet werden, während sich die untere Hälfte aus dem unteren Main(Voll-)bild und den unteren Helperzeilen ergibt.

### Cameramode-Verarbeitung

Das ColourPlus-Verfahren läßt sich auf Sequenzen, die mit einer elektronischen Kamera (50Hz, 2:1) produziert wurden, nur bedingt anwenden. Die verfahrensbedingte Reduktion auf 25 Bewegungsphasen pro Sekunde in der Chrominanz und in der horizontal hochfrequenten Luminanz führt bei bewegten Bilddinhalten zu störendem Rucken. Dieses Verfahren kann nur bei ruhenden oder langsam bewegten Bildinhalten durchgeführt werden. In bewegten Bildbereichen erfolgt daher bereits senderseitig ein horizontaler Frequenzmultiplex von Luminanz und Chrominanz, d. h. unterhalb von 3MHz befindet sich nur Luminanz, oberhalb nur Chromianz. So ist auch für bewegte Bildbereiche eine übersprechfreie Übertragung sichergestellt. Allerdings muß eine bewegungsabhängige Umsteuerung zwischen beiden Moden durchgeführt werden, die in Sender und Empfänger synchron läuft.

Die Bewegungsdetektion wird auf der Basis der Chrominanzinformation in Sender und Empfänger identisch durchgeführt. Bild 2 zeigt das Prinzip. Wie beim ColorPlus-Verfahren werden je zwei aufeinanderfolgende, zusammengehörige Habbilder gemittelt, und das Ergebnis wiederholt. Die resultierende Bildfolge muß nun um die Dauer eines Vollbildes verzögert werden und die Differenz zwischen verzögerter und unverzögerter Bildfolge gebildet werden. Diese liefert das Umsteuersignal für das Verfahren zur Reduktion der Übersprechstörungen. In Bereichen mit einer großen Differenz liegt viel Bewegung vor und es muß ein horizontaler Frequenzmultiplex von Luminanz und Chrominanz durchgeführt werden. Im anderen Fall kann ColourPlus angewendet werden.

Die Aufspaltung in Main- und Helperbereich erfolgt in diesem Mode auf Teilbildbasis. Die Helperzeilen für den oberen Bereich des Mainbildes des ersten Halbbildes befinden sich im Helper Top des ersten Halbbildes, die für die untere Bildhälfte im Helper Bottom. Die Helperzeilen für das zweite Teilbild sind dementsprechend in den Helperbereichen des zweiten Teilbildes zu finden.

### Helperverarbeitung

Das Helpersignal, welches die vertikalen Höheninformationen überträgt, darf für den kompatiblen Empfänger nicht sichtbar sein und muß totzdem rauschunempfindlich sein. Deshalb wird es mehreren Verarbeitungschritten unterzogen. Nachdem das Helpersignal auf der Senderseite vom Bildsignal abgetrennt worden ist, wird es einer Companding-Operation unterzogen, die zum einen die Amplitude des Helpers begrenzt, und zum anderen kleine Helperamplituden mehr verstärkt als große, so daß es rauschunempfindlicher wird. Eine anschließende Horizontalfilterung senkt hochfrequente Helperwerte leicht ab und führt eine Bandbegrenzung auf etwa 2.5MHz/-6dB durch. Empfangsseitig müssen diese Schritte wieder rückgängig gemacht werden. Ein Horizontalfilter hebt hochfrequente Helperwerte an (Inverse Spectrum Shaping) und eine Decompanding-Kennlinie gleicht die senderseitige Compandierung des Helpers aus. Die Compander/Decompander-Kennlinien von Kamera- und Filmmode sind unterschiedlich, da die Amplituden des Helpers im Filmmode in der Regel kleiner sind, als im Cameramode, und deshalb in diesem Mode eine geringere Absenkung des Helpers sinnvoll ist.

Bei der vorliegenden Bandbreite des Helpers ist eine Abtastfrequenz von 6.75MHz ausreichend, um ihn im Empfänger ohne Informationsverlust abspeichern zu können. Das Luminanzsignal des Mainbildes mit einer Bandbreite von 5MHz muß allerdings mit 13.5MHz abgetastet und gespeichert werden. Infolge des Compandings und Decompandings des Helpers bei der Übertragung wird der mögliche Wertebereich des Helpers eingeschränkt. Entsprechend der PALplus-Spezifikation können im Filmmode nach der Decompandingfunktion Helperwerte im Bereich von ±29LSB (bezogen auf 8Bit) auftreten. Die Abspeicherung dieser Werte ist mit 6Bit möglich. Im Cameramode liegen die Helperwerte im Bereich ±87LSB. Eine Begrenzung dieses Bereichs auf ±64LSB und Rundung auf gerade Helperwerte führt zu keinen sichtbaren Störungen im Bild. Damit läßt sich auch im Cameramode der Helper mit 6Bit darstellen und abspeichern. Für beide Mode ist damit eine optimierte Abspeicherung des Helpers mit einer Abtastfrequenz von 6.75MHz und einer Amplitudenquantisierung mit 6Bit möglich.

### PALplus-Decodierung mit reduziertem Speicherbedarf

### Gesamtsystem

Bild 3 zeigt das Gesamtsystem zur PALplus-Decodierung. Das eingehende Bild soll als bereits digitalisiert angenommen werden (Quantisiert mit 8Bit). Das Luminanzsignal ist mit 13.5MHz abgetastet worden, das Helpersignal mit 6.75MHz. Alternativ kann auch das Helpersignal mit 13.5MHz abgetastet und anschließend einer Anwärtskonversion im Verhältnis 2:1 unterzogen werden. Die Chrominanz sei bereits demoduliert und mit 3.375MHz abgetastet (4:1:1-System) worden. Das Helpersignal wird nun der Horizontalfilterung zur Spektrenformung unterzogen und anschließend der Look-up-Tabelle zwecks Decompanding zugeführt. Nun kann die Amplitudenauflösung für das Helpersignal auf 6Bit reduziert und das Signal gespeichert werden. Das Mainsignal wird an diesen Operationen vorbeigeführt und ebenfalls gespeichert. Das PALplus-Processing führt nun folgende Operationen aus:
- im Filmmode:: ColourPlus zur Reduktion der Übersprechstörungen vertikale Formatkonversion im Vollbild unter Nutzung des Helpersignals (nach Aufwärtskonversion auf 13.5MHz)
- im Cameramode:: Motion Adaptive ColourPlus zur Reduktion der Übersprechstörungen vertikale Formatkonversion im Teilbild unter Nutzung des Helpersignals (nach Aufwärtskonversion auf 13.5MHz)

Die Verarbeitung wird derart ausgeführt, daß die Gesamtlaufzeit für das Signal in beiden Moden gleich ist. Dadurch wird eine Umschaltung zwischen den Moden möglich, was bei einem senderseitigen Wechsel des Programmaterials notwendig ist.

### Speicherverwaltung

Für das PALplus-Processing stehen zwei Speicher zur Verfügung. In Speicher 2 kann nur das eingehende Bildsignal geschrieben werden, während in Speicher 1 auch bereits verarbeitete Werte geschrieben werden können. Die Speichersteuerung wird hier beispielhaft für Speicherbausteine mit der Organisation 6144Blocks∗40Worte∗12Bit beschrieben (TMS4C2971 von Texas Instruments). Jeder Block ist einzeln adressierbar und der Speicher hat einen Schreib- und einen Leseport (Dual Port Memory). Die Blocknummern 1-6144 seien Memory 1 zugeordnet, während sich die Blöcke 6145- 12288 im Memory 2 befinden. Bei den Beschreibungen der Speichersteuerungen sollen folgende Abkürzungen gelten:
- A:: erstes Halbbild
- B:: zweites Halbbild
- HT:: oberer Helper (Helper Top)
- HB:: unterer Helper (Helper Bottom)
- M:: zentraler Bildbereich (Main)
- A' (A''):: erster (zweiter) Teil des ersten Teilbildes
- ______: Speicher schreiben
- ...........: Speicher lesen

Die im folgenden beschriebenen Speichersteuerungen lassen sich auch auf andere Speicherbausteine übertragen. Der genannte Speicherbaustein wird hier nur beispielhaft verwendet.

### Filmmode

Bild 4 zeigt die Speichersteuerung für den Filmmode. Oben ist das eingehende Bild dargestellt. Dementsprechend setzt sich das Teilbild A1 aus den 36 Zeilen des oberen Helpers (HTA1), dem Mainbereich (MA1) mit 216 Zeilen, sowie den unteren 36 Helperzeilen (HBA1) zusammen. Unten ist die Abspeicherung dieser Daten dargestellt. Die erste Zeile von HTA1 wird ab Blocknummer 2124 abgelegt. Infolge der Quantisierung mit nur 6Bit pro Abtastwert und der Abtastung mit 6.75MHz belegt eine Zeile (52us) des Helpers 4.5 Blöcke des Speichers. Ein halber Block pro Helperzeile bleibt ungenutzt. Nach Abspeicherung der ersten Helperzeile wird im Speicher freier Platz zur Abspeicherung der Mainzeilen gelassen. Jede Mainzeile mit 720 Abtastwerten und 12Bit pro Abtastwert (wegen des 4:1:1-Systems) belegt 18 Blöcke. Auf jede Helperzeile kommen drei Mainzeile, so daß die nächste Helperzeile ab Blocknummer 2183 abgelegt wird. Mit Beginn des Mainbereichs MA1 werden die hierfür freigehaltenen Bereiche im Speicher aufgefüllt. Während der zweiten Hälfte des Mainbildes werden im Speicher jeweils 5 Blöcke für den unteren Helper freigelassen, der abschließend einsortiert wird. Im Speicher sind nun die Helperzeilen bereits in das Mainbild einsortiert. In dieser Form wird nun das zweite Halbbild ab Blocknummer 6372 abgelegt.

Zum Zeitpunkt t1 beginnt das sequentielle Auslesen der gespeicherten Werte. Für die Filmodeverarbeitung müssen die Main- und Helperzeilen von zwei aufeinanderfolgenden Halbbildern (A1 und B1) gleichzeitig ausgelesen werden. Dies ist auch aus einem Speicherbaustein möglich, da sie mit 27MHz ausgelesen werden können. Für die Mainzeilen kann dann die ColourPlus-Verarbeitung durchgeführt und das Result den Vertikalfiltern zur Aufwärtskonversion zur Verfügung gestellt werden. Die Helperzeilen werden den Vertikalfiltern direkt zugeführt. Durch den verzögerten Auslesebeginn stehen der Verarbeitung während der zweiten Hälfte des ausgehenden Bildes auch die notwendigen, und gerade eingegangenen, unteren Helperzeilen HBB1 zur Verfügung.

Wegen der Vollbildverarbeitung im Filmmode sind auch für die Berechnung des zweiten ausgehenden Halbbildes (B1/16:9) beide Halbbilder (A1 und B1) notwendig und müssen hierfür noch einmal ausgelesen werden. Während des Auslesens dieser Halbbilder muß aber bereits das soeben eingehende Halbbild A2 mit seinen Helper- und Mainzeilen abgespeichert werden. Damit nun nicht das noch benötigte Halbbild A1 überschrieben wird, muß ein Bufferbereich definiert werden. Dazu wird A1 ab der Blocknummer 0 bis zur Nummer 4247 gespeichert. Schreib/Lesekonflikte werden vermieden, denn, wenn die letzte Mainzeile von A2 (MA2) in die Blöcke 4230 bis 4247 geschrieben wird, ist die noch benötigte Zeile von A1 gerade ausgelesen worden. Halbbild B kann immer in den gleichen Speicherbereich geschrieben werden, da keine Konflikte auftreten. Zur Berechnung von B2/16:9 können nun A2 und B2 ausgelesen und verrechnet werden. Zur Abspeicherung von A3 wird, wie dargestellt, der gerade freigewordene Speicherplatz genutzt. Der Mainbereich von A3 muß dazu in die Bereiche MA3' und MA3" geteilt werden.

Es ergibt sich somit eine zyklische Schreib/Lesesteuerung über 6 Halbbilder. Durch die optimierte Abspeicherung des Helpersignals und die Steuerung der Speicher reicht für diesen Mode ein Speicherplatz von 10620 Blöcken (von 12288 verfügbaren) aus.

### Cameramode mit MACP

Bild 5 zeigt die Speichersteuerung für den Cameramode incl. der Nutzung der Speicher für den Bewegungsdetektor des Motion Adaptive ColourPlus-Verfahrens. Das Einschreiben der Halbbilder A1 und B1 erfolgt analog zum Filmmode, mit dem Unterschied, daß ab Blockadresse 3420 eingeschrieben wird. Der Bereich 1296 bis 3419 dient, wie im Filmmode als Buffer. Im Bereich 0 bis 1295 wird der Bewegungsdetektorspeicher untergebracht. Um die Speichersteuerung für Camera- und Filmmode weitgehend identisch auslegen zu können, kann auch für den Filmmode ein Adressoffset von 1296 Blöcken eingeführt werden.

Das Auslesen beginnt, wie im Filmmode zum Zeitpunkt t1. Für das Teilbild A1/16:9 wird, da die Aufspaltung nur im Teilbild ausgeführt wurde, auch nur der Helper dieses Teilbildes benötigt. Allerdings ist für die Bewegungsdetektion und zur Unterdrückung der Übersprechstörungen der Mainbereich des Teilbildes B1 notwendig, der nun ebenfalls ausgelesen wird. Die Helperzeilen von B1 werden hier noch nicht benötigt.

Im Speicherbereich 0 bis 1295 befindet sich jeweils die gemittelte Chroma des Mainbereichs von zwei zusammengehörigen Halbbildern ( C1=1/2(A1+B1)). Da nur die um den Faktor vier unterabgetastete Chrominanz (entsprechend 4Bit pro Abtastwert) gespeichert werden muß, werden zur Bewegungsdetektion pro Mainzeile 6 Blöcke benötigt. Die Differenz dieses Signals über 40ms geht entsprechend Abschnitt 2.2 in die Bewegungsdetektion ein. Im Zeitraum, in dem A1/16:9 berechnet wird, geschieht jeweils die Mittelung der Chrominanz von zwei zusammengehörigen Mainzeilen und die Berechnung der Differenz zur aus Speicher 1 ausgelesenen, vorher berechneten und abgespeicherten, Chrominanz C0. Auf dieser Basis wird bildpunktweise entschieden, ob ein horizontaler Frequenzmultiplex oder ColourPlus zur Crossunterdrückung eingesetzt wird. Im Zeitraum, in dem B1/16:9 ausgegeben wird, erfolgt die Bewegungsdetektion auf der Grundlage der gleichen Daten wie bei A1/16:9. Im Gegensatz zum vorherigen Halbbild wird nun aber, nachdem C0 aus dem Bewegungdetektorspeicher ausgelesen wurde und die Differenz zu C1 zur Entscheidung genutzt wurde, die Chrominanz C0 durch C1 überschrieben. Diese wird in den folgenden zwei 20ms-Zeiträumen genötigt.

Die Speicherbelegung für die Main- und Helpersignale erfolgt also analog zu der beim Filmmode. Zusätzlich ist noch ein Speicher von 1296 Blöcken für den Bewegungsdetektor notwendig. Insgesamt werden damit für den Cameramode mit MACP 11916 Blöcke belegt.

Durch eine optimierte Abspeicherung des Helpersignals und die dargestellte Speichersteuerung ist die PALplus-Decodierung sowohl im Film- als auch im Kameramode mit zwei Speicherbausteinen (je 2.9MBit) möglich. Die Verarbeitungsmoden entsprechen voll der PALplus-Spezifikation Rev. 3.0. Damit ist ein kostenreduzierter Decoder möglich. Andere Schaltungen zur PALplus-Decodierung benötigen für die gleichen Funktionen vier Speicherbausteine. Dadurch sind nicht nur die Kosten für den Speicher höher, sonderen es erhöht sich auch der Aufwand für das PCB und den Test des Moduls.

## Patentansprüche

1. Verfahren zur PALplus-Signal-Decodierung mit Speichern für Luminanz-, Chrominanz- und Helper-Signale, **gekennzeichnet** durch einen Zyklus über sechs Halbbilder mit den folgenden Schritten im Filmmode:
- 1.Halbbild, obere Hälfte:
Schreiben jeweils einer Zeile des oberen Helpers (HTA1) und dabei nach jeder Zeile Platz lassen für jeweils drei Zeilen des Mainbereichs (MA1), wobei die Daten des Mainbereichs auch Chrominanzdaten umfassen, danach Schreiben der Zeilen des Mainbereichs in die reservierten Plätze;
- 1. Halbbild, untere Hälfte:
Schreiben der Zeilen des Mainbereichs, wobei die Daten des Mainbereichs auch Chrominanzdaten umfassen, dabei nach jeweils drei Zeilen Platz lassen für eine Zeile des unteren Helpers, danach Schreiben der Zeilen des unteren Helpers (HBA1) in die reservierten Plätze;
- 2. Halbbild:
fortgesetztes Schreiben in analoger Weise wie für das 1. Halbbild;
- während des Schreiben des 2. Halbbilds:
Beginn des gleichzeitigen Lesens des 1. und 2. Halbbilds (A1, B1);
- nach Schreiben des 2. Halbbilds und während des gleichzeitigen Lesens des 1. und 2. Halbbilds:
Beginn des fortgesetzten Schreibens des 3. Halbbilds in analoger Weise wie für das 1. und 2. Halbbild, beginnend nach einem zwischengefügten Bufferbereich;
- während des Schreibens des 3. Halbbilds und nach Lesen des 1. und 2. Halbbilds:
Beginn des nochmaligen gleichzeitigen Lesens des 1. und 2. Halbbilds für die Berechnung des zweiten ausgehenden Halbbildes;
- nach Schreiben des 3. Halbbilds und während des nochmaligen gleichzeitigen Lesens des 1. und 2. Halbbilds:
Beginn des fortgesetzten Schreibens des 4. Halbbilds in analoger Weise wie für das 1. und 2. Halbbild, beginnend nach einem zwischengefügten Bufferbereich, insbesondere im gleichen Speicherbereich wie für das 2. Halbbild;
- während des Schreiben des 4. Halbbilds und nach dem zweiten Lesen des 1. und 2. Halbbildes:
Beginn des gleichzeitigen Lesens des 3. und 4. Halbbilds (A2, B2);
- nach Schreiben des 4. Halbbilds und während des gleichzeitigen Lesens des 3. und 4. Halbbilds:
Beginn des fortgesetzten Schreibens des 5. Halbbilds im gerade freigewordenen Speicherbereich, in analoger Weise wie für das 1. und 2. Halbbild;
- während des Schreibens des 5. Halbbilds und nach Lesen des 3. und 4. Halbbilds:
Beginn des nochmaligen gleichzeitigen Lesens des 3. und 4. Halbbilds für die Berechnung des vierten ausgehenden Halbbildes;
- nach Schreiben des 5. Halbbilds und während des nochmaligen gleichzeitigen Lesens des 3. und 4. Halbbilds:
Beginn des fortgesetzten Schreibens des 6. Halbbilds in analoger Weise wie für das 1. und 2. Halbbild, beginnend nach einem zwischengefügten Bufferbereich, insbesondere im gleichen Speicherbereich wie für das 2. Halbbild;
- während des Schreiben des 6. Halbbilds und nach dem zweiten Lesen des 3. und 4. Halbbildes:
Beginn des zweimaligen gleichzeitigen Lesens des 5. und 6. Halbbilds (A3, B3; A0, B0);
und **gekennzeichnet** durch einen Zyklus über sechs Halbbilder mit den folgenden Schritten im Cameramode:
- das Schreiben der Halbbilder erfolgt analog zum Filmmode, wobei aber in einem festgelegten Speicherbereich nur Bewegungsdetektor-Daten geschrieben werden und die übrigen Daten in einem entsprechend verschobenen Speicherbereich geschrieben werden;
- statt des ersten Lesens des 1. und 2. Halbilds nur Lesen des 1. Halbbilds und Lesen der Bewegungsdetektor-Daten (D0) für das 1. Vollbild;
- statt des zweiten Lesens des 1. und 2. Halbilds nur Lesen des 2. Halbbilds und Lesen der Bewegungsdetektor-Daten für das 1. Vollbild mit jeweils anschließendem Schreiben der Bewegungsdetektor-Daten (D1) für das 2. Vollbild;
- statt des ersten Lesens des 3. und 4. Halbilds nur Lesen des 3. Halbbilds und Lesen der Bewegungsdetektor-Daten (D1) für das 2. Vollbild;
- statt des zweiten Lesens des 3. und 4. Halbilds nur Lesen des 4. Halbbilds und Lesen der Bewegungsdetektor-Daten für das 2. Vollbild mit jeweils anschließendem Schreiben der Bewegungsdetektor-Daten (D2) für das 3. Vollbild;
- statt des ersten Lesens des 5. und 6. Halbilds nur Lesen des 5. Halbbilds und Lesen der Bewegungsdetektor-Daten (D2) für das 3. Vollbild;
- statt des zweiten Lesens des 5. und 6. Halbilds nur Lesen des 6. Halbbilds und Lesen der Bewegungsdetektor-Daten für das 3. Vollbild mit jeweils anschließendem Schreiben der Bewegungsdetektor-Daten für das 1. Vollbild des nächsten sechs-Halbbild-Zyklus.

2. Verfahren nach Anspruch 1, bei dem die Helper-Signale mit gegenüber dem Luminanzsignal reduzierter Abtastrate gespeichert werden.

3. Verfahren nach Anspruch 1 oder 2, bei dem die Helper-Signale mit einer Amplitudenauflösung von 6 Bit pro Abtastwert gespeichert werden.

4. Verfahren nach einem der Ansprüche 1 bis 3, bei dem das Schreiben des 5. Halbbilds (A3) auf zwei Speicherbereiche aufgeteilt wird.

5. Verfahren nach einem der Ansprüche 1 bis 4, bei dem als Speichermittel zwei Halbbild-Speicher mit jeweils 2.9MBit verwendet werden.

## Claims

1. Method for PALplus signal decoding with memories for luminance, chrominance and helper signals, **characterized** by a cycle over six fields with the following steps in the film mode:
- 1st field, top half:
writing of a respective line of the top helper (HTA1) and, in the process, leaving space after each line for three respective lines of the main area (MA1), the data of the main area also comprising chrominance data, then writing of the lines of the main area to the reserved locations;
- 1st field, bottom half:
writing of the lines of the main area, the data of the main area also comprising chrominance data, in the process leaving space after three respective lines for a line of the bottom helper, then writing of the lines of the bottom helper (HBA1) to the reserved locations;
- 2nd field:
continued writing in a manner analogous to that for the 1st field;
- during the writing of the 2nd field:
beginning of the simultaneous reading of the 1st and 2nd fields (A1, B1);
- after the writing of the 2nd field and during the simultaneous reading of the 1st and 2nd fields:
beginning of the continuous writing of the 3rd field in a manner analogous to that for the 1st and 2nd fields, beginning after an interposed buffer area;
- during the writing of the 3rd field and after the reading of the 1st and 2nd fields:
beginning of the repeated simultaneous reading of the 1st and 2nd fields for the calculation of the second outgoing field;
- after the writing of the 3rd field and during the repeated simultaneous reading of the 1st and 2nd fields:
beginning of the continued writing of the 4th field in a manner analogous to that for the 1st and 2nd fields, beginning after an interposed buffer area in particular in the same memory area as for the 2nd field;
- during the writing of the 4th field and after the second reading of the 1st and 2nd fields:
beginning of the simultaneous reading of the 3rd and 4th fields (A2, B2);
- after the writing of the 4th field and during the simultaneous reading of the 3rd and 4th fields:
beginning of the continued writing of the 5th field in the memory area that has just become free, in a manner analogous to that for the 1st and 2nd fields;
- during the writing of the 5th field and after the reading of the 3rd and 4th fields:
beginning of the repeated simultaneous reading of the 3rd and 4th fields for the calculation of the 4th outgoing field;
- after the writing of the 5th field and during the repeated simultaneous reading of the 3rd and 4th fields:
beginning of the continued writing of the 6th field in a manner analogous to that for the 1st and 2nd fields, beginning after an interposed buffer area, in particular in the same memory area as for the 2nd field;
- during the writing of the 6th field and after the second reading of the 3rd and 4th fields:
beginning of the twice repeated simultaneous reading of the 5th and 6th fields (A3, B3; A0, B0);
and **characterized** by a cycle over six fields with the following steps in the camera mode:
- the writing of the fields is effected analogously to the film mode, in which case, however, only motion detector data are written in a defined memory area and the remaining data are written in a correspondingly shifted memory area;
- instead of the first reading of the 1st and 2nd fields, just reading of the 1st field and reading of the motion detector data (D0) for the 1st frame;
- instead of the second reading of the 1st and 2nd fields, just reading of the 2nd field and reading of the motion detector data for the 1st frame with in each case subsequent writing of the motion detector data (D1) for the 2nd frame;
- instead of the first reading of the 3rd and 4th fields, just reading of the 3rd field and reading of the motion detector data (D1) for the 2nd frame;
- instead of the second reading of the 3rd and 4th fields, just reading of the 4th field and reading of the motion detector data for the 2nd frame with in each case subsequent writing of the motion detector data (D2) for the 3rd frame;
- instead of the first reading of the 5th and 6th fields, just reading of the 5th field and reading of the motion detector data (D2) for the 3rd frame;
- instead of the second reading of the 5th and 6th fields, just reading of the 6th field and reading of the motion detector data for the 3rd frame with in each case subsequent writing of the motion detector data for the 1st frame of the next six-field cycle.

2. Method according to Claim 1, in which the helper signals are stored with a reduced sampling rate by comparison with the luminance signal.

3. Method according to Claim 1 or 2, in which the helper signals are stored with an amplitude resolution of 6 bits per sample.

4. Method according to one of Claims 1 to 3, in which the writing of the 5th field (A3) is divided between two memory areas.

5. Method according to one of Claims 1 to 4, in which two field memories each of 2.9 Mbits are used as storage means.

## Revendications

1. Procédé de décodage des signaux PALplus avec mémoires pour signaux de luminance, de chrominance et de compensation (Helper signal), **caractérisé par** un cycle de six trames avec les éléments suivants en mode film :
- première trame, moitié supérieure :
écriture d'une ligne de l'élément de compensation supérieur (Helper HTAI) puis introduction après chaque ligne de l'espace nécessaire pour trois lignes de la zone principale (MAI), où les données de la zone principale contiennent également des données de chrominance, ensuite écriture des lignes de la zone principale aux emplacements réservés ;
- première trame, moitié inférieure :
écriture des lignes de la zone principale (MA1), où les données de la zone principale contiennent également des données de chrominance, introduction après trois lignes de l'espace nécessaire pour une ligne de l'élément de compensation inférieur, ensuite écriture des lignes de l'élément de compensation inférieur aux emplacements réservés ;
- deuxième trame :
suite de l'écriture suivant le même processus que pour la première trame ;
- lors de l'écriture de la deuxième trame :
début de la lecture simultanée des première et deuxième trames (A1, B1) ;
- après l'écriture de la deuxième trame et lors de la lecture simultanée des première et deuxième trames :
début de la reprise d'écriture de la troisième trame suivant le même processus que pour les première et deuxième trames, s'effectuant après l'insertion d'une zone tampon intermédiaire ;
- lors de l'écriture de la troisième trame et après lecture des première et deuxième trames :
début de la nouvelle lecture simultanée des première et deuxième trames pour le calcul de la deuxième trame de départ ;
- après l'écriture de la troisième trame et lors de la nouvelle lecture simultanée des première et deuxième trames :
début de la reprise d'écriture de la quatrième trame suivant le même processus que pour les première et deuxième trames, s'effectuant après l'insertion d'une zone tampon intermédiaire, plus précisément dans la même zone de mémoire que celle utilisée pour la deuxième trame ;
- lors de l'écriture de la quatrième trame et après la deuxième lecture des première et deuxième trames :
début de la lecture simultanée des troisième et quatrième trames (A2, B2);
- après l'écriture de la quatrième trame et lors de la lecture simultanée des troisième et quatrième trames :
début de la reprise d'écriture de la cinquième trame dans la zone de mémoire qui vient de se libérer, suivant le même processus que pour les première et deuxième trames ;
- lors de l'écriture de la cinquième trame et après lecture des troisième et quatrième trames :
début de la nouvelle lecture simultanée des troisième et quatrième trames pour le calcul de la quatrième trame de départ ;
- après l'écriture de la cinquième trame et lors de la nouvelle lecture simultanée des troisième et quatrième trames :
début de la reprise d'écriture de la sixième trame suivant le même processus que pour les première et deuxième trames, s'effectuant après l'insertion d'une zone tampon intermédiaire, plus précisément dans la même zone de mémoire que celle utilisée pour la deuxième trame ;
- lors de l'écriture de la sixième trame et après la deuxième lecture des troisième et quatrième trames :
début de la deuxième lecture simultanée des cinquième et sixième trames (A3, B3, A0, B0);
et **caractérisé par** un cycle de six trames avec les éléments suivants en mode caméra :
l'écriture des trames s'effectue selon un mode analogue à celui du mode film, mais seules les données relatives au détecteur de mots sont écrites dans une zone de mémoire déterminée et les données restantes sont écrites dans une zone de mémoire créée de la même façon ;
- lecture uniquement de la première trame et des données relatives au détecteur de mouvements (D0) pour la première image en lieu et place de la première lecture des première et deuxième trames ;
- lecture uniquement de la deuxième trame et des données relatives au détecteur de mouvements pour la première image avec écriture ultérieure des données relatives au détecteur de mouvements (D1) pour la deuxième image en lieu et place de la deuxième lecture des première et deuxième trames ;
- lecture uniquement de la troisième trame et des données relatives au détecteur de mouvements (D1) pour la deuxième image en lieu et place de la première lecture des troisième et quatrième trames ;
- lecture uniquement de la quatrième trame et des données relatives au détecteur de mouvements pour la deuxième image avec écriture ultérieure des données relatives au détecteur de mouvements (D1) pour la troisième image en lieu et place de la deuxième lecture des troisième et quatrième trames ;
- lecture uniquement de la cinquième trame et des données relatives au détecteur de mouvements (D2) pour la troisième image en lieu et place de la première lecture des cinquième et sixième trames ;
- lecture uniquement de la sixième trame et des données relatives au détecteur de mouvements pour la troisième image avec écriture ultérieure des données relatives au détecteur de mouvements (D1) pour la première image du cycle à six trames suivant en lieu et place de la deuxième lecture des cinquième et sixième trames.

2. Procédé conforme à la revendication 1, pour lequel les signaux de l'élément de compensation sont stockés avec une fréquence de balayage réduite par rapport au signal de luminance.

3. Procédé conforme à la revendication 1 ou 2, pour lequel les signaux de l'élément de compensation sont stockés avec une résolution d'amplitude de 6 bits par valeur de balayage.

4. Procédé conforme aux revendications 1 à 3, pour lequel l'écriture de la cinquième trame (A3) est répartie sur deux zones de mémoire.

5. Procédé conforme à une des revendications 1 à 4, pour lequel deux mémoires de trame de 2,9 MBits sont utilisées comme support d'enregistrement.
